# EUROPEAN PATENT APPLICATION

(11) **EP 3 909 831 A1**
(43) Date of publication of application: **17.11.2021**
(21) Application number: 19909048.1
(22) Date of filing: 25.12.2019
(51) Int. Cl.: B62D 17/00, B60G 3/20, B62D 7/15

(54) **SUSPENSION UNIT AND VEHICLE**

(30) Priority: 08.01.2019 JP 2019000923
(71) Applicant: Fomm Corporation, Kawasaki-shi, Kanagawa 212-0032 (JP)
(72) Inventor: TSURUMAKI Hideo, Kawasaki-shi, Kanagawa 212-0032 (JP); MORITA Takayuki, Kawasaki-shi, Kanagawa 212-0032 (JP); KANI Akira, Kani-shi, Gifu 509-0247 (JP); EIDA Shogo, Kani-shi, Gifu 509-0247 (JP)
(74) Representative: TBK
(86) International application number: PCT/JP2019/051008
(87) International publication number: WO 2020/145166

(57) **Abstract**

A suspension unit is provided with: a base member 11 provided with a shaft portion 111, the shaft portion 111 being provided on a top surface 11a of the base member 11 so as to be erected upright, the base member 11 being mounted to a chassis 50 by inserting the shaft portion 111 into a hole of the chassis 50; a suspension arm 12 mounted to the base member 11 so as to be freely swingable; and a wheel mounting body 13 assembled to the suspension arm 12, the wheel mounting body 13 being configured such that a wheel 20 can be mounted to the wheel mounting body 13.

## Description

### TECHNICAL FIELD

The present invention relates to a suspension unit and a vehicle.

### BACKGROUND ART

By anticipating that self-driving vehicles and car sharing services are becoming more common, the inventors are developing a vehicle capable of being parked in a very small space in an efficient manner. It is preferable that such a vehicle be able to move in the lateral direction and/or perform a neutral turn. JP2016-55804A discloses a technique that achieves a lateral-directional movement and the neutral turn.

### SUMMARY OF INVENTION

However, with the above-described conventional technique, the configuration is complex and a freedom in a suspension geometry is limited, and so, it was difficult to set the suitable suspension geometry.

The present invention has been conceived in light of the conventional problem. An object of the present invention is to provide a suspension unit and a vehicle in which a suitable suspension geometry can be set easily and capable of being parked in a very small space in an efficient manner.

The present invention provides the following solutions to solve the above-mentioned problems to be solved. In the following, although the reference signs corresponding to those used in embodiments of the present invention are given for ease of understanding, there is no limitation thereto. In addition, the configurations described with the reference signs may be replaced or modified appropriately.

A one aspect is a suspension unit (10) comprising: a base member (11) provided with a shaft portion (111), the shaft portion (111) being provided on a top surface (11a) of the base member (11) so as to be erected upright, and the base member (11) being mounted to a chassis (50) by inserting the shaft portion (111) into a hole of the chassis (50); a suspension arm (12) mounted to the base member (11) so as to be freely swingable; and a wheel mounting body (13) assembled to the suspension arm (12), the wheel mounting body (13) being configured such that a wheel (20) can be mounted to the wheel mounting body (13).

### BRIEF DESCRIPTION OF DRAWINGS

[FIG. 1] FIG. 1 is a perspective view showing one embodiment of a suspension unit.
[FIG. 2] FIG. 2A is a front view of the suspension unit and FIG. 2B is a side view of the suspension unit.
[FIG. 3] FIG. 3 is a perspective view showing a state in which the suspension unit is employed for a front wheel and is assembled to a chassis frame.
[FIG. 4] FIG. 4A is a front view and FIG. 4B is a side view showing a state in which the suspension unit is assembled to the chassis frame.
[FIG. 5] FIG. 5 is a diagram in which a vehicle employing the suspension units is viewed from above, with a roof thereof cut out, and in which wheels are superimposed such that orientations of the wheels can be seen easily.
[FIG. 6] FIG. 6 is a diagram in which the vehicle employing the suspension units is viewed from above, with the roof thereof cut out, and in which the wheels are superimposed such that orientations of the wheels can be seen easily.

### DESCRIPTION OF EMBODIMENTS

Embodiments of the present invention and advantages of the present invention will be described below in detail with reference to the attached drawings.

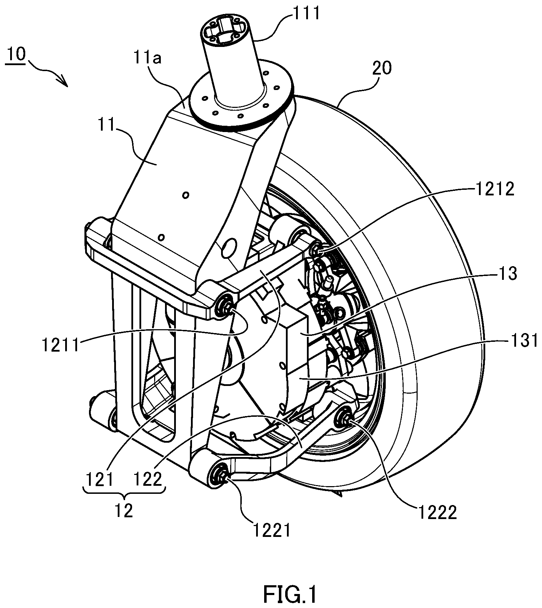

FIG. 1 is a perspective view showing one embodiment of a suspension unit.

A suspension unit 10 illustrated in FIG. 1 is of a double-wishbone type and mainly has: an upright 11; a suspension arm 12 (an upper suspension arm 121 and a lower suspension arm 122); and a wheel mounting body 13. In the following, the upper suspension arm is appropriately referred to as "the upper arm". The lower suspension arm is appropriately referred to as "the lower arm".

The upright 11 is a base member for mounting the suspension arm 12 (the upper arm 121 and the lower arm 122), etc. As described below, the upright 11 is mounted to a chassis. A shaft portion 111 is fixedly provided on a top surface 11a of the upright 11 so as to be erected upright. As described below, the upright 11 is mounted to the chassis by inserting the shaft portion 111 into a hole in the chassis.

The upper arm 121 is a substantially U-shaped member having two arm portions that are arranged so as to be parallel with each other and a linkage portion that links parts close to base ends of the arm portions. Holes through which a pivot shaft 1211 is inserted are respectively formed in the parts close to the base ends of the arm portions of the upper arm 121. Holes through which a pivot shaft 1212 is inserted are respectively formed in parts close to tip ends of the arm portions of the upper arm 121. The upper arm 121 is supported by the upright 11 via the pivot shaft 1211. In this state, the linkage portion of the upper arm 121 is located on the inner side of the upright 11 (on the side opposite from a wheel 20).

The lower arm 122 is a substantially H-shaped member having shorter base-end-side portions and longer tip-end-side portions. The lower arm 122 has the two arm portions and a linkage portion that links the two arm portions. In order to ensure a clearance from the wheel mounting body 13, the two arm portions are shaped such that parts close to tip ends are more separated away from each other than parts close to base ends of the arm portions. The two arm portions are linked at lower parts thereof by the linkage portion. Holes through which a pivot shaft 1221 is inserted are respectively formed in the parts close to the base ends of the arm portions of the lower arm 122. Holes through which a pivot shaft 1222 is inserted are respectively formed in the parts close to the tip ends of the arm portions of the lower arm 122. The lower arm 122 is supported by the upright 11 via the pivot shaft 1221. In this state, the linkage portion of the lower arm 122 is located on the outer side of the upright 11 (on the same side as the wheel 20).

The wheel mounting body 13 is a member for mounting the wheel 20 via an axle shaft. The wheel mounting body 13 is mounted to the parts close to the tip ends of the upper arm 121 and the lower arm 122 via the pivot shaft 1212 and the pivot shaft 1222. The wheel mounting body 13 illustrated in FIG. 1 is a motor for driving the wheel 20, and a housing 131 is mounted to the upper arm 121 and the lower arm 122.

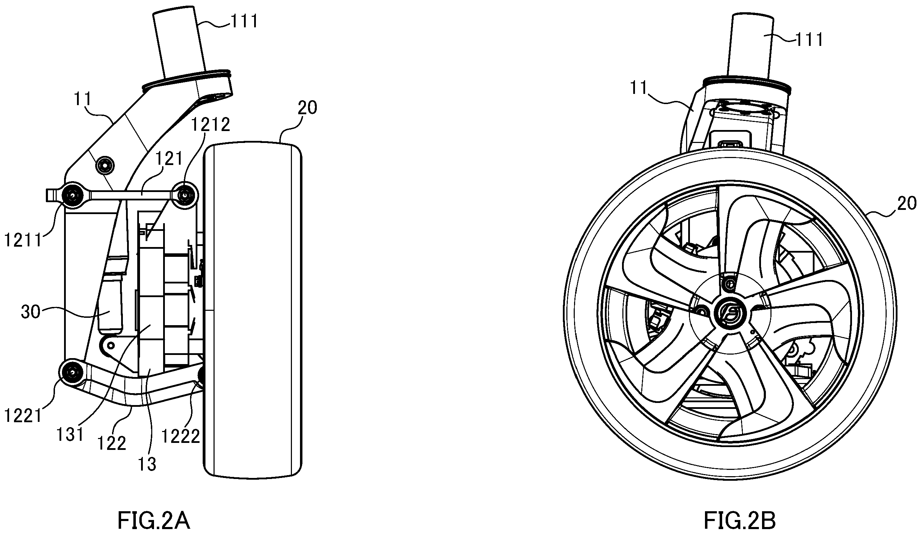

Next, a structure of the suspension unit 10 will be further described with reference to a front view of the suspension unit shown in FIG. 2A and a side view of the suspension unit shown in FIG. 2B.

As shown in FIG. 2A, a hole for mounting the lower arm 122 is formed in a lower end of the upright 11. This hole is aligned with the holes formed in the parts close to the base ends of the arm portions of the lower arm 122, and the pivot shaft 1221 is inserted therethrough, and thereby, the lower arm 122 is mounted to the upright 11 so as to be freely swingable.

In addition, a hole for mounting the upper arm 121 is formed directly above the hole into which the pivot shaft 1221 is to be inserted. This hole is aligned with the holes formed in the parts close to the base ends of the arm portions of the upper arm 121, and the pivot shaft 1211 is inserted therethrough, and thereby, the upper arm 121 is mounted to the upright 11 so as to be freely swingable.

Furthermore, as shown in FIG. 2A, the lower arm 122 is longer than the upper arm 121. In a state in which the upper arm 121 and the lower arm 122 are mounted to the upright 11, when viewed in a front view, although the tip ends of the upper arm 121 do not reach the wheel 20, the tip ends of the lower arm 122 reach the wheel 20. In other words, when viewed in a front view, the tip ends of the lower arm 122 are positioned at the outer side of the tip ends of the upper arm 121.

Still furthermore, as shown in FIG. 2A, the arm portions of the lower arm 122 each has a shape in which, as the arm portion extends from the part close to the base end to the tip end side, the arm portion is first oriented downwards, and then, oriented upwards from an intermediate position. Because the arm portions have such a shape, the clearance is ensured between the lower arm 122 and the wheel mounting body 13.

In addition, as shown in FIG. 2A, a shock absorber 30 is connected to a back surface of the wheel mounting body 13 and the upright 11. A shock exerted from a road surface is reduced by the shock absorber 30.

### (First Assembly Embodiment Of Suspension Unit To Chassis)

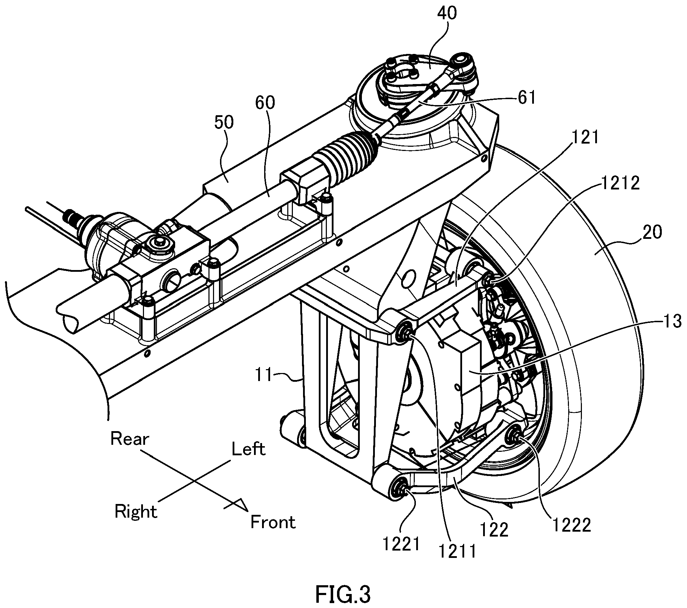

FIG. 3 is a perspective view showing a state in which the above-described suspension unit employed for a front wheel and is assembled to a chassis frame.

Holes are formed in both ends of a chassis frame 50 in the left-right direction, and a bearing is fitted to each hole. By inserting the shaft portion 111 of the upright 11 so as to penetrate through the inside of the bearing, the upright 11 is assembled to the chassis frame 50 so as to be freely rotatable about the shaft portion 111 serving as a rotation center. In addition, a lever 40 is fixedly provided on a tip end of the shaft portion 111.

A steering gearbox 60 is assembled to the chassis frame 50. A tie rod 61 extending from the steering gearbox 60 is connected to the lever 40, and the lever 40 is moved in response to an operation of a steering wheel by a driver. In turn, the upright 11 is then rotated about the shaft portion 111 serving as the rotation center.

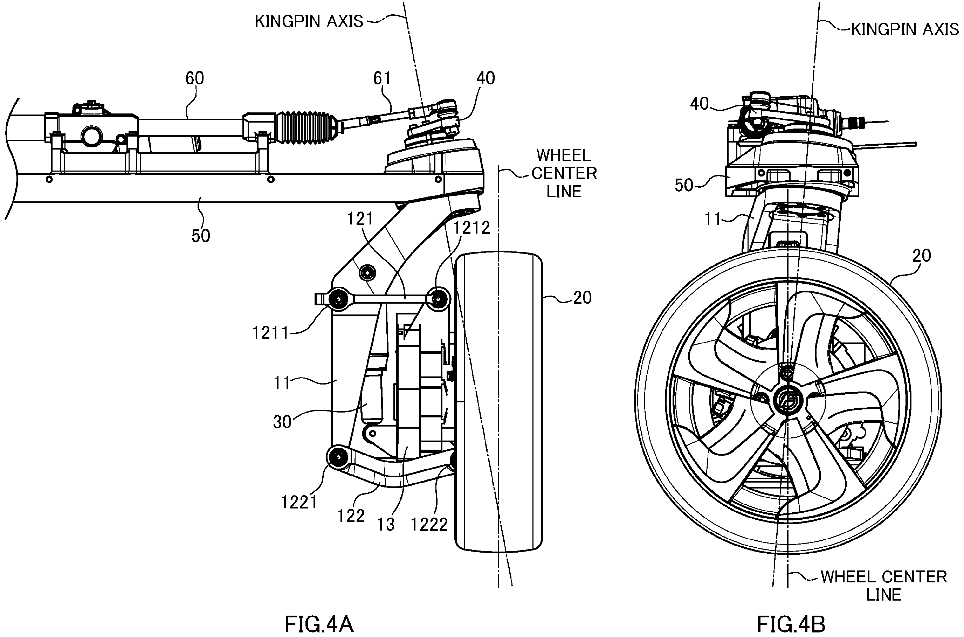

FIG. 4A is a front view showing a state in which the suspension unit is assembled to the chassis frame, and FIG. 4B is a side view showing a state in which the suspension unit is assembled to the chassis frame.

As described above, the upright 11 is rotated about the shaft portion 111 serving as the rotation center in response to the operation of the steering wheel by the driver. In other words, the rotation center axis of the shaft portion 111 corresponds to a kingpin axis.

As shown in FIG. 4A, the top surface (an assembly surface to the chassis frame 50) 1 1a of the upright 11 is inclined with respect to a horizontal plane. As described above, the shaft portion 111 is fixedly provided on the top surface 11a so as to be erected upright. In other words, the shaft portion 111 is inclined with respect to the vertical line. The rotation center axis of the shaft portion 111 corresponds to the kingpin axis. Therefore, by simply changing an inclination angle of the shaft portion 111 (the inclination angle of the top surface 11a), it is possible to change a kingpin inclination angle and a camber angle with ease.

In addition, as shown in FIG. 4B, the top surface (the assembly surface to the chassis frame 50) 11a of the upright 11 is inclined with respect to a horizontal plane. The shaft portion 111 is fixedly provided on the top surface 11a so as to be erected upright. The rotation center axis of the shaft portion 111 corresponds to the kingpin axis. Therefore, by simply changing the inclination angle of the top surface 11a, it is possible to change a caster angle with ease.

Furthermore, the distance between a point at which the kingpin axis intersects with the ground surface and the center of the contact patch of the wheel is called a scrub radius (also called as a kingpin offset). If the scrub radius is excessively large, problems, such as increase in a steering effort and increase in a kickback from the road surface, are caused. In contrast, according to the structure in this embodiment, by simply modifying the top surface 11a, it is possible to change the point at which the kingpin axis intersects with the ground surface, and therefore, it is possible to change the scrub radius with ease. It is easy to set the scrub radius to zero, or as shown in FIG. 4A, it is easy to the scrub radius to have a negative value.

Therefore, by simply changing the shape of the upright 11 (especially, the inclination angle, dimension, and so forth of the top surface 11a), it is possible to freely set a suspension geometry, such as the kingpin inclination angle, the camber angle, the caster angle, and the scrub radius, and it is easy to achieve the suitable suspension geometry.

A rear-wheel suspension unit may be assembled to the chassis frame 50 by being fixedly provided thereon. By employing such a configuration, the vehicle can be made into a general front wheel steering type vehicle. In this case, because the rear-wheel suspension units do not rotate, they may be directly assembled to the chassis frame 50 without interposing the bearing.

Similarly to the front-wheel suspension unit, by employing the motors for driving the wheels 20 as the wheel mounting bodies 13 of the rear-wheel suspension units, the vehicle can be made into an all wheel drive type vehicle. In addition, if the motors for driving the wheels 20 are not employed in contrast to the front-wheel suspension units, the vehicle can be made into a front wheel driven type vehicle. In this case, for example, those in which the axle shaft is simply assembled to the housing 131 may be employed as the wheel mounting body 13.

In a case in which an in-wheel motor is employed for the front wheel, the in-wheel motor is unavoidably positioned at a point of a ball joint forming the kingpin axis in the conventional structure, and therefore, it is difficult to suitably set the kingpin axis.

In contrast, according to this embodiment, the suspension unit is provided with the base member (the upright 11) to which the suspension arm is mounted so as to be freely swingable. In this structure, this base member is rotated in response to the operation of the steering wheel by the driver. By employing such a structure, a freedom is achieved in the setting of the kingpin axis, and so, it has become possible to freely set the suspension geometry, such as the kingpin inclination angle, the camber angle, and the caster angle. In other words, it is possible to easily set the suspension geometry in a suitable manner.

In addition, because the suspension unit is rotated integrally, the suspension arm does not interfere with other parts. Therefore, the steer angle is not limited.

As parts, such as a suspension arm, etc., specialized products need not be used, and conventional products may be used, and thus, it is possible to suppress a production cost.

In addition, a size of the motor and a size of a brake can also be changed freely.

### (Second Assembly Embodiment Of Suspension Unit To Chassis)

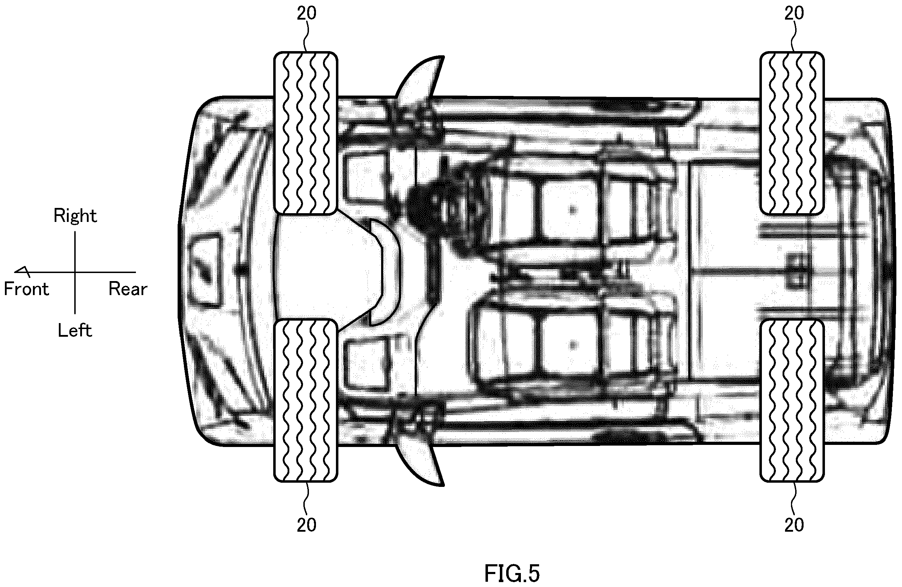

FIG. 5 is a diagram in which a vehicle employing the suspension units is viewed from above, with a roof thereof cut out, and in which wheels are superimposed such that orientations of the wheels can be seen easily.

In the first assembly embodiment described above, the front-wheel suspension unit is mounted so as to be rotatable about the shaft portion 111 serving as the rotation center, and the rear-wheel suspension unit is assembled by being fixedly provided on the chassis frame 50.

In contrast, in a second assembly embodiment, similarly to the front-wheel suspension unit, the rear-wheel suspension units are also assembled so as to be freely rotatable with respect to the chassis frame 50 by employing the structure shown in FIGs. 3 and 4.

As described above, because the suspension unit is rotated integrally, the suspension arm does not interfere with other parts. Therefore, the steer angle is not limited. It is also possible to rotate the suspension unit about the shaft portion 111 of the upright 11 serving as the rotation center by 90 degrees. Therefore, as shown in FIG. 5, according to the second assembly embodiment, it is possible to orient the front wheels and the rear wheels in the transverse direction.

By making the vehicle into the all wheel drive type vehicle in which the motors for driving the wheels 20 are respectively employed for the wheel mounting bodies 13 of the front-wheel suspension units and for the wheel mounting bodies 13 of the rear-wheel suspension units, the vehicle can move in the lateral direction as it travels by driving the wheels in a state in which the respective wheels are oriented in the transverse direction. Thus, it is possible to realize the vehicle capable of being parked in a very small space in an efficient manner.

In addition, the motor for driving the wheel 20 may be employed for the wheel mounting body 13 of the one of the left and right front-wheel suspension units (for example, the left front wheel), and the motor may not be employed for the wheel mounting body 13 of the other of the front-wheel suspension units (for example, the right front wheel). The motor for driving the wheel 20 may be employed for the wheel mounting body 13 of the other of the left and right rear-wheel suspension units (for example, the right rear wheel), and the motor may not be employed for the wheel mounting body 13 of the one of the rear-wheel suspension units (for example, the left rear wheel). As described above, the motors for driving the wheels 20 may be employed only for the wheel mounting bodies 13 of the suspension units that are arranged diagonally. Also with such a configuration, as shown in FIG. 5, by driving the diagonally-arranged driving wheels in a state in which the wheels are oriented in the transverse direction, it is possible to achieve a lateral movement. Because this vehicle is of a two wheel drive type, it is possible to realize a vehicle that is cheaper than the all wheel drive type vehicle, but still capable of being parked in a very small space in an efficient manner.

### (Third Assembly Embodiment Of Suspension Unit To Chassis)

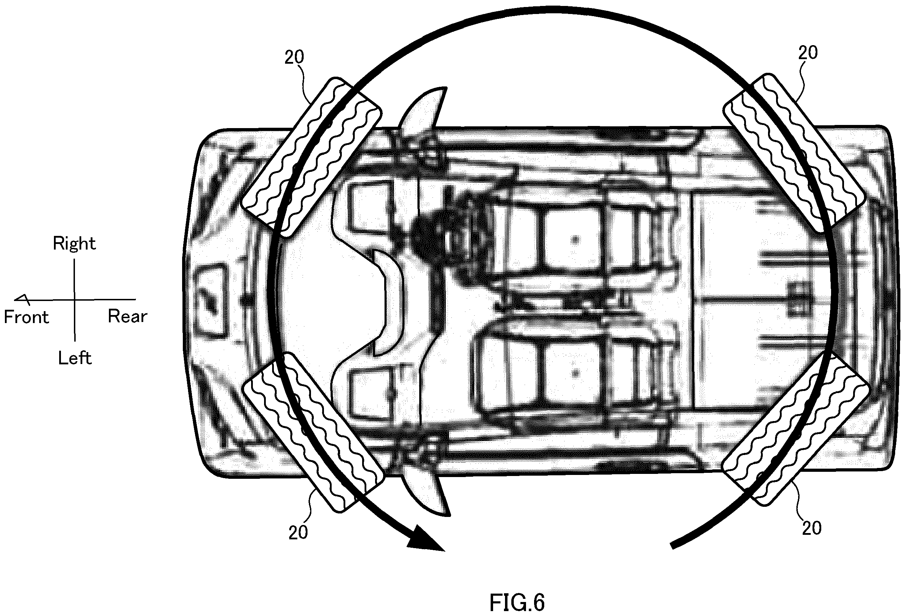

FIG. 6 is a diagram in which a vehicle employing the suspension units is viewed from above, with a roof thereof cut out, and in which wheels are superimposed such that orientations of the wheels can be seen easily.

In the above description, the structure in which the lever 40 is fixedly provided on the tip end of the shaft portion 111 of the upright 11, and this lever 40 is rotated by the tie rod 61 of the steering gearbox 60 has been described. However, the structure for rotating the shaft portion 111 is not limited to such a structure. For example, an actuator, such as the motor, etc., may be assembled to the shaft portion 111 of the upright 11, thereby rotating the shaft portion 111. With such a configuration, it is possible to change the orientations of the wheels on the left and the right independently from each other. Therefore, it may also be possible to orient the respective wheels to the orientation shown in FIG. 6. In this case, a movement as shown by an arrow in FIG. 6, in other words, a neutral turn can be performed, and thereby, it is also possible to achieve the vehicle capable of being parked in a very small space in an efficient manner. Also in this case, the motors for driving the wheels 20 may be respectively employed for the wheel mounting bodies 13 of all of the suspension units, or the motors for driving the wheels 20 may be respectively employed for only the wheel mounting bodies 13 of the diagonally arranged suspension units.

Although the embodiments of the present invention have been described in the above, the above-mentioned embodiments merely illustrate a part of application examples of the present invention, and the technical scope of the present invention is not intended to be limited to the specific configurations of the above-described embodiments.

For example, in the above description, as a format of the suspension, the double-wishbone-type suspension has been illustrated. However, it is not intended to limit the technical scope of the present invention to the double-wishbone-type. For example, the present invention may also be applied to a strut type suspension, a multi link type suspension, and so forth.

In addition, specific shapes, sizes, and so forth of the respective components shown in the drawings are merely examples. They may be modified appropriately.

The above-mentioned embodiments may be combined appropriately.

This application claims priority based on Japanese Patent Application No. 2019-923 filed with the Japan Patent Office on January 8, 2019, the entire contents of which are incorporated into this specification by reference.

## Claims

1. A suspension unit comprising:
a base member provided with a shaft portion, the shaft portion being provided on a top surface of the base member so as to be erected upright, and the base member being mounted to a chassis by inserting the shaft portion into a hole of chassis;
a suspension arm mounted to the base member so as to be freely swingable; and
a wheel mounting body assembled to the suspension arm, the wheel mounting body being configured such that a wheel can be mounted to the wheel mounting body.

2. The suspension unit according to claim 1, wherein
the wheel mounting body is a motor for driving the wheel, the wheel mounting body being configured such that a housing of the wheel mounting body is assembled to the suspension arm.

3. The suspension unit according to claim 1 or 2, wherein
when viewed in a front view, the shaft portion of the base member is inclined with respect to a vertical line in a state in which the base member is mounted to the chassis.

4. The suspension unit according to any one of claims 1 to 3, wherein the base member is mounted to the chassis so as to be freely rotatable about the shaft portion serving as a rotation center, the shaft portion being inserted into a hole of a bearing assembled to the chassis.

5. The suspension unit according to claim 4, further comprising
a lever fixedly provided on the shaft portion, the lever being connected to a tie rod extending from a steering gearbox, wherein
the base member is rotated in response to a movement of the tie rod.

6. The suspension unit according to claim 4, further comprising
an actuator assembled to the shaft portion, wherein
the base member is rotated by the actuator.

7. A vehicle comprising:
the suspension unit according to any one of claims 4 to 6 mounted to the chassis so as to be freely rotatable, the suspension unit being configured such that a right front wheel is assembled to the suspension unit;
the suspension unit according to any one of claims 4 to 6 mounted to the chassis so as to be freely rotatable, the suspension unit being configured such that a left front wheel is assembled to the suspension unit;
the suspension unit according to any one of claims 1 to 3 fixedly provided on the chassis, the suspension unit being configured such that a right rear wheel is assembled to the suspension unit; and
the suspension unit according to any one of claims 1 to 3 fixedly provided on the chassis, the suspension unit being configured such that a left rear wheel is assembled to the suspension unit.

8. A vehicle comprising:
the suspension unit according to any one of claims 4 to 6 mounted to the chassis so as to be freely rotatable, the suspension unit being configured such that a right front wheel is assembled to the suspension unit;
the suspension unit according to any one of claims 4 to 6 mounted to the chassis so as to be freely rotatable, the suspension unit being configured such that a left front wheel is assembled to the suspension unit;
the suspension unit according to any one of claims 4 to 6 mounted to the chassis so as to be freely rotatable, the suspension unit being configured such that a right rear wheel is assembled to the suspension unit; and
the suspension unit according to any one of claims 4 to 6 mounted to the chassis so as to be freely rotatable, the suspension unit being configured such that a left rear wheel is assembled to the suspension unit.

9. The vehicle according to claim 7 or 8, wherein
the wheel mounting bodies of at least suspension units arranged diagonally, when viewed in a planar view, among the suspension unit to which the right front wheel is assembled, the suspension unit to which the left front wheel is assembled, the suspension unit to which the right rear wheel is assembled, and the suspension unit to which the left rear wheel is assembled, are motors for driving the wheels.

10. The vehicle according to claim 7 or 8, wherein
the wheel mounting bodies of all of the suspension units of the suspension unit to which the right front wheel is assembled, the suspension unit to which the left front wheel is assembled, the suspension unit to which the right rear wheel is assembled, and the suspension unit to which the left rear wheel is assembled are motors for driving the wheels.
